# EUROPÄISCHE PATENTSCHRIFT

(11) **EP 3 412 399 B1**
(45) Veröffentlichungstag und Bekanntmachung des Hinweises auf die Patenterteilung: **28.04.2021**
(21) Anmeldenummer: 18183693.3
(22) Anmeldetag: 23.10.2015
(51) Int. Cl.: B23K 26/03, B23K 26/38, B23K 31/00, B23K 31/12, B23K 26/06

(54) **VERFAHREN ZUR KONTROLLE VON LASERSCHNEIDVORGÄNGEN IM HOCHLEISTUNGSBEREICH MIT SCHNEIDVORGANGUNTERBRECHUNG ENTSPRECHENDE VORRICHTUNG UND COMPUTERPROGRAMMPRODUKT**
METHOD OF CONTROLLING A LASER CUTTING PROCESS IN A HIGH ENERGY ZONE WITH INTERRUPTION OF THE CUTTING PROCESS ; CORRESPONDING DEVICE AND COMPUTER PROGRAM
METHODE DE CONTROLE D'UN PROCEDE DE DECOUPE AU LASER DE HAUTE ENERGIE AVEC INTERRUPTION DU PROCEDE DE DECOUPAGE ; DISPOSITIF ET PROGRAMME D'ORDINATEUR CORRESPONDANTS

(43) Veröffentlichungstag der Anmeldung: 12.12.2018
(62) Teilanmeldung aus: 15191289.6
(73) Patentinhaber: Bystronic Laser AG, 3362 Niederönz (CH)
(72) Erfinder: Lüdi, Andreas, 3400 Burgdorf (CH); Bader, Roland, 4933 Rütschelen (CH)
(74) Vertreter: Schwarz, Claudia

(56) Entgegenhaltungen:
- EP-A1- 2 687 317
- DE-A1-102011 004 117
- JP-A- H0 433 786
- JP-A- 2000 158 169
- JP-A- 2002 331 383

## Beschreibung

Die Erfindung betrifft ein Verfahren zur Kontrolle von Laserschneidvorgängen im Hochleistungsbereich grösser 1 kW Durchschnittsleistung, wobei nach Unterbrechung und/oder Abschluss eines mit vorgegebenen Schneidparametern durchgeführten Schneidvorganges automatisiert eine Qualitätskontrolle durchgeführt wird, gemäss dem Oberbegriff von Anspruch 1, sowie eine Hochleistungs-Laserschneidvorrichtung, mit einer Anordnung zur Ermittlung mindestens eines Qualitätsparameters des Bearbeitungsergebnisses, umfassend zumindest eine Detektoranordnung zur Erfassung aus dem Scanbereich reflektierter Strahlung und oder emittierter, insb. thermischer, Strahlung und eine damit verbundene Auswerteeinheit sowie eine Steuereinheit für die Laserschneidvorrichtung, gemäss dem Oberbegriff von Anspruch 14 und ein Computerprogrammprodukt, siehe Anspruch 22 (siehe z.B. 10 2011 004 117 A1).

Insbesondere betrifft die vorliegende Erfindung die Kontrolle des Laserschneidvorganges durch Offline-Detektion von Qualitätsmerkmalen bzw. Qualitätsdefekten. Es ist dies ein neuartiges Postprocess-Verfahren, welches ohne Teileentnahme unmittelbar nach der Bearbeitung, oder intermittierend zur Bearbeitung, die Qualität der produzierten Teile, resp. gewisse Merkmale davon, messen bzw. bestimmen kann.

Aufgrund der physikalischen Eigenschaften einer Online-Prozesskontrolle, also einer in Echtzeit während dem Bearbeitungsprozess funktionierenden Überwachung, ist es beim Laserschneiden oft nicht möglich, die Qualitätsmerkmale des Bearbeitungsergebnisses direkt aus den Prozessemissionen messen zu können. Im Gegensatz zum Laserschweissen, wo einige Qualitätsmerkmale direkt aus dem Schmelzpool und der entstehenden Naht mittels Kamerabildern sichtbar gemacht werden können, sind insbesondere beim Laserschneiden die Qualität der Schnittflächen für eine im Schneidkopf untergebrachte koaxiale Detektoranordnung, z.B. einer Kamera, sehr stark verkürzt oder überhaupt nicht sichtbar, da die Schnittflächen senkrecht zur Beobachtungsrichtung liegen. Es müssen deshalb immer geeignete Charakteristiken aus Detektorsignalen oder Kamerabildern gefunden werden, welche mehr oder weniger zuverlässig mit Schneidqualitätsmerkmalen korrelieren. Die Stärke der Korrelation kann je nach Prozesszustand und Blechdicke variieren, womit die Online-Schätzung der Schneidqualität immer mit einer Unsicherheit behaftet ist.

Für die Lasermaterialbearbeitung, insbesondere Laserschneiden, sind fast ausschliesslich Inprocess- oder Online-Verfahren publiziert. Postprocess- oder Offline-Verfahren zur Beurteilung der Bearbeitungsqualität sind kaum publiziert. Insbesondere solche Postprocess-Verfahren nicht, welche ohne Teileentnahme unmittelbar nach der Bearbeitung, oder intermittierend zur Bearbeitung, die Teilequalität resp. gewisse Merkmale davon, beurteilen.

So offenbart beispielsweise die DE 112012005889T5 ein ganz einfaches Offline-Verfahren, bei welchem vor und während des Laserschneidens an einem bestimmten Ort der Blechtafel Testteile geschnitten werden. Es wird mit einem geeigneten Sensor überprüft, ob die Testteile herausgefallen sind. Wenn ja, wird die Bearbeitung begonnen bzw. fortgesetzt, wenn nein, wird die Bearbeitung gestoppt. Ähnliche Vorgangsweisen finden sich auch in weiteren Schriften. So offenbart die DE 102011 004 117 A1 ein Verfahren zur Kontrolle von lasergeschnittenen Werkstücken. Nach dem Schneiden einer (kleinen) Innenkontur resp. eines Lochs wird der Schneidkopf in deren Mitte positioniert und durch erneutes Einstechen überprüft, ob das Abfallteil herausgefallen ist oder nicht. Falls beim Einstich keine Emissionen entstehen, ist das Loch herausgefallen. Ein ähnliches Verfahren offenbart die DE102010039525 A1, wonach die Anwesenheitsprüfung der geschnittenen Innenkontur mit dem Abstandssensor der Schneiddüse überprüft wird. Beide Verfahren werden zur Qualitätskontrolle von Lochblechen angewendet, bevor diese weitere Fertigungsschritte durchlaufen.

Die Aufgabe der vorliegenden Erfindung ist es nun, ein Verfahren bereitzustellen, welches die oben aufgeführten Nachteile eines Online-Verfahrens bzw. bekannter Postprocess-Überwachungen nicht aufweist, sowie eine Vorrichtung anzugeben, bei deren Verwendung diese Nachteile nicht auftreten. Insbesondere soll das Verfahren nicht nur für Lochbleche oder Teile mit kleinen Innenkonturen anwendbar sein und auch nicht auf das separate Schneiden von Testteilen angewiesen sein, sondern eine schnelle direkte Messung bzw. Bestimmung von Schneidqualitätsmerkmalen resp. Qualitätsdefekten der zu produzierenden Teile ermöglichen, unmittelbar nach oder intermittierend zum Bearbeitungsprozess.

Ein Verfahren zur Kontrolle von Laserschneidvorgängen im Hochleistungsbereich größer 1 kW Durchschnittsleistung gemäß der Erfindung ist in Anspruch 1 definiert.

Gemäß einem Aspekt ist das eingangs beschriebene Verfahren dadurch gekennzeichnet, dass der Schneidvorgang nach einem ersten Teilbearbeitungsvorgang unterbrochen wird, dass zumindest eine Teilstrecke der im Zuge des ersten Teilbearbeitungsvorganges geschnittenen Bearbeitungsstrecke gescannt wird, vorzugsweise mit höherer Geschwindigkeit als jener für das Laserschneiden des ersten Teilbearbeitungsvorganges und vorzugsweise nahe oder auf bzw. entlang dergleichen Bearbeitungsbahn, dass auf Basis des Scanergebnisses automatisch mindestens ein Qualitätsmerkmal - ein Schlackenrückstand in einem Schnittspalt auf der Bearbeitungsbahn, nicht vollständig durchgeschnittene Konturabschnitte, eine Schnittspaltbreite oder eine Schnittkantenrauheit - des Bearbeitungsergebnisses bestimmt und mit vordefinierten Qualitätsvorgaben verglichen wird, und dass je nach Resultat des Vergleichs mindestens eine der folgenden Massnahmen durchgeführt wird: Ausgabe einer Fehlermeldung, Abbruch des Schneidvorganges, Anpassung zumindest eines der Schneidparameter, Nachbearbeitung einer oder mehrerer Fehlstellen, Fortsetzung des Schneidvorganges, vorzugsweise mit dem geändertem Schneidparametersatz. Gegenüber der Online-Prozesskontrolle zeichnet sich das Offline-Verfahren dadurch aus, dass bestimmte Qualitätsmerkmale wie Schlackenrückstand, Schnittkantenrauheit oder Schnittspaltbreite im Nachgang zum Schneiden ohne Entnahme der Teile direkt mit einem eigens dafür entwickelten Messverfahren gemessen werden. Dadurch ist eine Postprocess-Qualitätskontrolle direkt nach der Bearbeitung möglich und allfällige Qualitätsdefekte können ohne Online-Monitoring dennoch festgestellt und der Bearbeitungsprozess entweder gestoppt oder justiert werden. Dabei können vorteilhafterweise die relevanten Qualitätsmerkmale direkt bestimmt werden. Bei entsprechend hoher Scangeschwindigkeit können auch die unproduktiven Nebenzeiten auf ein Minimum beschränkt werden.

Eine vorteilhafte Weiterführung dieses Verfahrens ist dadurch gekennzeichnet, dass für den Schneidvorgang zusätzlich zumindest zeitweise ein Online-Prozessüberwachungsverfahren durchgeführt wird, wobei je nach Resultat des Vergleichs allenfalls eine Anpassung zumindest eines Überwachungsparameters des Online-Prozessüberwachungssystems und/oder eine Fortsetzung des Schneidvorganges mit dem angepassten Online-Überwachungsparametersatz erfolgt.

Bevorzugt wird dabei nach Fortsetzung des Schneidvorganges dieser nach einem weiteren Teilbearbeitungsvorgang nochmals unterbrochen, wird
zumindest eine Teilstrecke der weiteren Teilbearbeitungsstrecke gescannt, vorzugsweise mit höherer Geschwindigkeit als jener für den weiteren Teilbearbeitungsvorgang, vorzugsweise auf der gleichen Bearbeitungsbahn,
wird dann automatisch mindestens ein Qualitätsmerkmal des Bearbeitungsergebnisses, vorzugsweise die gleichen Qualitätsmerkmale wie für die erste Teilbearbeitungsstrecke, bestimmt und mit vordefinierten Qualitätsvorgaben verglichen, und wird je nach Resultat des Vergleichs mindestens eine der folgenden Massnahmen durchgeführt: Ausgabe einer Fehlermeldung, Abbruch des Schneidvorganges, Anpassung zumindest eines der Schneidparameter, Anpassung zumindest eines Überwachungsparameters eines Online-Prozessüberwachungssystems, Fortsetzung des Schneidvorganges, vorzugsweise mit dem geändertem Schneidparametersatz oder dem angepassten Online-Überwachungsparametersatz.

Eine weitere vorzugsweise Variante der Erfindung ist dadurch gekennzeichnet, dass deren Verfahrensschritte im Zuge des Schneidvorganges mehrere Male durchlaufen werden, wobei der gesamte Schneidvorgang vorzugsweise einen kompletten Schneidplan für eine Mehrzahl von Werkstücken und jeder Teilbearbeitungsvorgang maximal den Schneidplan für eines der Werkstücke umfasst, allenfalls einen Teilabschnitt des Schneidplans für ein Werkstück umfasst. Vorteilhafterweise ist der Überwachungsgrad variabel einstellbar bzw. die Steuereinheit entsprechend variabel programmierbar. Beispielsweise könnte für den Tagesbetrieb eine manuelle Überwachung durch einen Operateur vorgesehen und die Offline-Prozesskontrolle dazu ausgeschaltet werden, während in der Nachtschicht der Offline-Überwachungsgrad maximal eingestellt und zumindest jedes Teil - wenn nicht sogar Teilabschnitte innerhalb jedes Teils - gescannt wird/werden.

Bevorzugt erfolgt die Unterbrechung des Schneidvorganges nach einer Teilbearbeitungsstrecke mit vorgegebener Schnittlänge.

Das erfindungsgemäße Verfahren ist dadurch gekennzeichnet, dass in Abhängigkeit des Vergleichs der mehreren Qualitätsmerkmale, insbesondere Schnittspaltbreite, Schnittflächenrauheit und nicht vollständig durchgeschnittene Konturbereiche, sowie auch Schlackenrückstand, mit den Qualitätsvorgaben zumindest einer der Schneidparameter wie insbesondere Vorschub, Laserleistung, Fokusposition und Schneidgasdruck automatisch justiert werden.

Es kann dabei auch die Länge der Teilbearbeitungsstrecke bzw. des gescannten Teilabschnittes davon in Abhängigkeit von sich verändernden Eigenschaften der Laserschneidvorrichtung oder der Geometrie der Schneidbahn gewählt werden.

Bevorzugt ist/sind die Anzahl und/oder die Auswahl der Teilbearbeitungsstrecken vorwählbar, insbesondere, dass die Bearbeitungsstrecke ohne Teilbearbeitungsstrecke abgearbeitet wird oder dass der Schneidvorgang nur eine Teilbearbeitungsstrecke aufweist und/oder dass nur auf einer Teilmenge der Bearbeitungsstrecken Teilbearbeitungsvorgänge abgearbeitet werden.

Eine weitere vorteilhafte Ausführungsvariante der Erfindung sieht vor, dass insbesondere der erste Teilbearbeitungsvorgang und Scanvorgang bzw. die erste Gruppe von Teilbearbeitungsvorgängen und Scanvorgängen einem eigentlichen Bearbeitungsvorgang als Kalibrier- oder Referenzvorgang vorgelagert ist/sind, und je nach Resultat des Vergleichs der gemessenen Qualitätsmerkmale mit den Qualitätsvorgaben für zumindest einen Schneidparameter dessen Wert für den nachfolgenden eigentlichen Bearbeitungsvorgang justiert wird, wobei vorzugsweise mehrere Teilkalibriervorgänge mit unterschiedlichen Schneidparametereinstellungen nacheinander durchgeführt werden und/oder innerhalb eines Teilkalibriervorganges ein oder mehrere Schneidparameter verändert werden, wobei nach den Teilbearbeitungsvorgängen die Qualitätsmerkmale automatisch bestimmt und die nach Abschluss des Kalibriervorgangs folgende eigentliche Bearbeitung entweder mit angepassten Schneidparametern und/oder angepassten Überwachungsparametern durchgeführt wird.

Eine wieder andere Ausführungsvariante des erfindungsgemässen Verfahrens ist dadurch gekennzeichnet, dass zumindest ein Teilvorgang des Schneidvorganges durch ein Online-Prozessüberwachungsverfahren überwacht wird, und ein Verfahren nach zumindest einem der vorhergehenden Absätze in Abhängigkeit des Resultates des Online-Prozessüberwachungsverfahrens ausgelöst und durchgeführt wird.

Bevorzugt kann bei dieser Variante weiters vorgesehen sein, dass zumindest ein Kalibriervorgang mit wechselnden Schneidparameter-Einstellungen durchgeführt und durch ein Online-Prozessüberwachungsverfahren überwacht wird, wobei eine Konkordanz der ermittelten Qualitätsmerkmale des Bearbeitungsergebnisses mit den verwendeten Schneidparameter-Einstellungen und mit Charakteristiken der Signale des Online-Prozessüberwachungssystems erstellt und zur Verwendung in letzterem gespeichert werden.

Eine Hochleistungsschneidvorrichtung gemäß der Erfindung ist im Anspruch 14 definiert.

Eine Ausführungsform der Erfindung ist dadurch gekennzeichnet, dass ein Bearbeitungsvorgang mit zeitlich aufeinanderfolgenden Variationen mehrerer Bearbeitungsparameter durchgeführt und der Bearbeitungsprozess abhängig von zumindest einem mittels eines Online-Prozessüberwachungsverfahrens geschätzten Qualitätsmerkmal des Bearbeitungsergebnisses und Feedback von Messwerten aus einem Verfahren nach zumindest einem der vorhergehenden Absätze zu dem oder den gleichen Qualitätsmerkmal(en) mithilfe der steuerbaren Prozessparameter geregelt wird, wobei das Verfahren gemäss zumindest einem der vorhergehenden Absätze auf den ganzen Teilbearbeitungsbereichen oder vorzugsweise nur auf Teilabschnitten der Teilbearbeitungsbereiche angewendet wird.

Bei dieser Variante kann bevorzugt vorgesehen sein, dass Algorithmen des Online-Prozessüberwachungsverfahrens und deren Parametrierung laufend mithilfe von vorzugsweise gelegentlichem Feedback des Verfahrens gemäss zumindest einem der vorhergehenden Absätze angepasst werden.

Durch diese Verknüpfung von Online- und Offline-Prozessüberwachung nimmt die Monitoring-Fähigkeit des Online-Systems immer weiter zu, wodurch seltener die Offline-Überwachung benötigt wird und somit die unproduktiven Zeiten weiter verringert werden können. Mit zunehmender Bearbeitungs- bzw. Schneidzeit auf einer Maschine akkumuliert das System über die Offline-Prozessüberwachung zunehmend Wissen über die Qualitätsmerkmale des Schneidergebnisses, deren Korrelation in den Online-Signalen und die Beziehung zu den Prozessparametern, wodurch ein adaptives Monitoring und eine adaptive Regelung ermöglicht wird. Dadurch steigt die gesamte Prozesssicherheit. Die eingangs gestellte Aufgabe wird für eine Hochleistungs-Laserschneidvorrichtung mit einer Anordnung zur Ermittlung mindestens eines Qualitätsparameters des Bearbeitungsergebnisses, umfassend zumindest eine Detektoranordnung zur Erfassung aus dem Scanbereich reflektierter Strahlung und oder emittierter, insb. thermischer, Strahlung und eine damit verbundene Auswerteeinheit, sowie eine Steuereinheit für die Laserschneidvorrichtung, dadurch gelöst, dass die Steuereinheit und/oder die Auswerteeinheit ausgelegt sind, um ein Verfahren nach einem der vorhergehenden Absätze durchzuführen. Insbesondere kann in der Steuereinheit ein Programm implementiert sein, das ein Verfahren nach einem der vorhergehenden Absätze durchführt.

Weiters kann bevorzugt vorgesehen sein, dass die Detektoranordnung eine Anordnung zur berührungslosen Distanzmessung umfasst, beispielsweise einen Laserdistanzsensor, welcher extern am Schneidkopf befestigt ist, oder direkt koaxial in den Strahlengang des Arbeitslaserstrahls integriert ist, oder eine Anordnung für ein bildgebendes Verfahren, vorzugsweise eine Kamera, welche am Schneidkopf oder dessen Führungsmechanik befestigt ist, vorzugsweise aber koaxial im Schneidkopf integriert ist, eine kamerabasierte Triangulationsanordnung, oder einen strahlungsempfindlichen Detektor, beispielsweise eine koaxial angeordnete Fotodiode.

Eine vorteilhafte Ausführungsform der Vorrichtung ist dadurch gekennzeichnet, dass die Steuereinheit adaptiert ist, um den Arbeitslaser während des Scanvorganges gepulst zu betreiben, wobei vorzugsweise der Arbeitslaserstrahl bezüglich Fokusdurchmesser so eingestellt wird, dass dieser kleiner ist als die Schnittspaltbreite und die Fokusposition so eingestellt wird, dass der Arbeitslaserstrahl die Schnittflächen nicht berührt, und dass die Detektoranordnung adaptiert ist, um das kurze Aufglühen von Schlacke im Schnittspalt zu erfassen.

Diese Vorrichtung weist besonders bevorzugt eine Detektoranordnung mit einer im Laserschneidkopf angeordneten Kamera auf, deren Beobachtungsrichtung in Ausbreitungsrichtung des Arbeitslaserstrahls zumindest hinter einem der Bearbeitungszone nächstliegenden fokussierenden Element schräg zur optischen Achse des Laserschneidkopfes verläuft, wobei die Kamera vorzugsweise exzentrisch zu dessen optischer Achse angeordnet ist und vorzugsweise über einen Exzenter senkrecht zur aktuellen Scanrichtung derselben nachgeführt werden kann und wobei allenfalls der Abstand zwischen Kamera-Achse und optischer Achse des Laserschneidkopfes variabel einstellbar ist, dazu ausgebildet, die Schnittfläche seitlich zu erfassen, um mindestens einen Qualitätsparameter, insbesondere eine Schnittflächenrauheit zu ermitteln.

Eine weitere erfindungsgemässe Variante der Vorrichtung ist dadurch gekennzeichnet, dass die Beobachtungsrichtung der Detektoranordnung in Ausbreitungsrichtung des Arbeitslaserstrahls zumindest hinter einem der Bearbeitungszone nächstliegenden fokussierenden Element unter einem Polarwinkel grösser 5° in Bezug auf die optische Achse des Arbeitslaserstrahls auf die Bearbeitungszone gerichtet ist, vorzugsweise unter einem Polarwinkel grösser oder gleich 7°, insbesondere unter einem Polarwinkel von ca. 10°.

Dabei ist es von besonderem Vorteil, wenn zumindest eine Detektoranordnung vorgesehen ist, deren Beobachtungsrichtung in einem Bereich des Azimutwinkels von maximal 45° zur Bewegungsrichtung des Laserbearbeitungskopfes und entgegen deren Bewegungsrichtung auf die Bearbeitungszone gerichtet ist.

Besonders bevorzugt sind mehrere Detektoranordnungen, vorzugsweise mindestens fünf, insbesondere mindestens acht Detektoranordnungen, die entlang eines zur optischen Achse koaxialen und im Wesentlichen senkrechten Kreises vorzugsweise gleich verteilt angeordnet sind.

Eine weitere vorteilhafte Ausführungsform ist dadurch gekennzeichnet, dass eine Beleuchtungsanordnung für die Detektoranordnung vorhanden ist, welche den Arbeitslaser selbst, einen Hilfslaser oder einen Pilotlaser für den Arbeitslaser umfasst.

Ein Computerprogrammprodukt gemäß der Erfindung ist in Anspruch 22 definiert. Das Computerprogrammprodukt wird nach Laden in den Speicher einer Anordnung einer programmierbaren Laserschneidvorrichtung, insbesondere in die Steuereinheit und/oder Auswerteeinheit, die Durchführung eines Verfahrens nach einem der oben angeführten Absätze mit der Verfahrensbeschreibung bewirken. Die Anordnung dient zur Kontrolle von Laserschneidvorgängen im Hochleistungsbereich und insbesondere zur Ermittlung mindestens eines Qualitätsparameters des Bearbeitungsergebnisses.

In der nachfolgenden Beschreibung wird die Erfindung anhand konkreter Anwendungsbeispiele und in Bezug auf die beigefügten Zeichnungen näher erläutert.

### Dabei zeigt

- Fig. 1: schematisch einen ersten Verfahrensschritt, einen ersten Abschnitt eines Konturschnittes mit einem Hochleistungs-Laserstrahl, mit anschliessender Offline-Detektion von z. B. Schlackenrückstand,
- Fig. 2: einen weiteren Verfahrensschritt, der nach Fortsetzung des Konturschnittes einen weiteren Bearbeitungsabschnitt umfasst, wieder mit anschliessender Offline-Detektion,
- Fig. 3: eine Darstellung zur Erläuterung der Offline-Detektion von Schlackenrückstand mittels Laserpulsen und resultierendem Prozessleuchten,
- Fig. 4a: beispielhaft eine exzentrisch angeordnete Kamera zur Offline-Detektion der Rauheit eines Schneidteils,
- Fig. 4b: schematisch die Seitenansicht des Schnittspaltes mit Darstellung der Rauheit als qualitätsbestimmender Eigenschaft,
- Fig. 5: einen beispielhaften Detektoraufbau zur nicht-koaxialen Beobachtung mit Konusspiegel und acht am Umfang verteilten Fotodetektoren, und
- Fig. 6: ein schematisches Diagramm verschiedener Möglichkeiten der Systemintegration von Online- und Offline-Systemen zu selbstlernender, kognitiver Prozesskontrolle.

Aufgrund der physikalischen Eigenschaften einer Online-Prozesskontrolle, wie Beobachtung der Prozesszone anstelle der entstandenen Schnittflächen, oder der aufgrund des z.T. tiefen Schnittspalts optisch stark verkürzten Sicht auf die Prozesszone und die unmittelbar angrenzenden Schnittflächen, ist es - wie eingangs bereits erläutert - nicht möglich, die Qualitätsmerkmale der Schnittflächen direkt aus den Prozessemissionen messen zu können.

Demgegenüber zeichnet sich das im Folgenden beschriebene erfindungsgemässe Offline-Verfahren dadurch aus, dass bestimmte Qualitätsmerkmale der geschnittenen Teile vorzugsweise auch ohne deren Entnahme unmittelbar nach oder intermittierend zum Schneidprozess direkt gemessen werden. Somit kann bei schlechter Schneidqualität bereits frühzeitig und nicht erst nach Fertigstellung eines Werkstücks in den Prozess eingegriffen werden, wodurch Ausschuss verringert oder bestenfalls gänzlich verhindert werden kann. Qualitätsmerkmale resp. Qualitätsdefekte sind gemäß der Erfindung: Nicht vollständig durchgeschnittene Konturabschnitte, Schnittspaltbreite, Schnittkantenrauheit, oder insbesondere der beim Laserbrennschneiden auftretende Schlackenrückstand. Für die Offline-Überwachung unterbricht die Laserschneidanlage den Schneidprozess nach zumindest einem ersten Abschnitt mit bestimmter Schnittlänge, allenfalls regelmässig nach Durchlaufen von Abschnitten mit bestimmter Schnittlänge, nach Ablauf bestimmter Zeitspannen oder gemäss anderen vorgebbaren Abläufen.

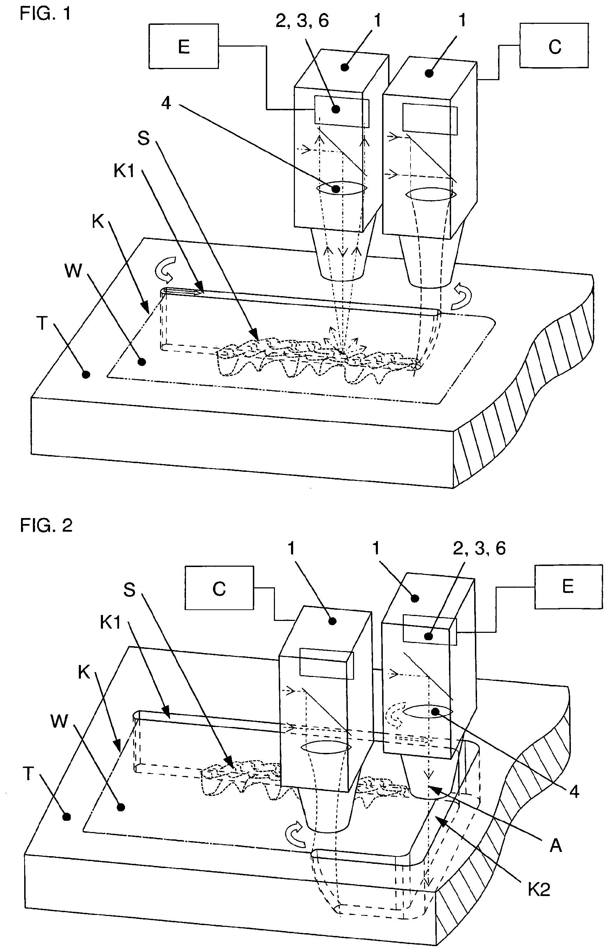

Fig. 1 zeigt diese Situation beispielhaft für den Qualitätsdefekt Schlackenrückstand S im Schnittspalt. Der Schneidkopf 1 scannt nach Unterbrechung des Laserschneidvorganges, hier nach Schneiden einer ersten Teilkontur K1 einer kompletten Schneidkontur K eines aus einer Blechtafel T herzustellenden Werkstücks W, diese Teilkontur K1 nochmals ab. Vorzugsweise erfolgt dieser Scanvorgang mit hohem Vorschub, d.h. mit höherer Geschwindigkeit als jener beim Schneiden der jeweiligen Teilkontur K1, so dass für die Qualitätskontrolle nicht zu viel Zeit verloren geht. Die Länge der mit der Offline-Detektion abzuscannenden Bereiche darf nicht zu lang gewählt werden, um zu verhindern, dass sich der Schnittspalt infolge Wärmedehnung in der Breite verändert oder gar verschliesst. Der Scanvorgang erfolgt also auch daher typischerweise mit schnellerer Geschwindigkeit als der Schneidevorgang. Vorzugsweise fährt der Schneidkopf 1, der wie in Fig. 1 angedeutet auch eine Detektoranordnung 2, 3, 6 integriert oder angebaut hat, die gleiche Bearbeitungsbahn ab wie beim Schneidvorgang bzw. bleibt nahe dieser Bahn.

Auf Basis des Scanergebnisses werden in einer Auswerteeinrichtung E automatisch mehrere Qualitätsmerkmale des Bearbeitungsergebnisses bestimmt und mit vordefinierten Qualitätsvorgaben verglichen. Dazu und für alle weiteren beschriebenen Vorgänge ist in der Steuereinheit C ein Programm implementiert, vorzugsweise als in einem programmierbaren Speicher in Form eines ablauffähigen Programms abgelegte Anweisungen.

Falls nun durch den Scan- und Auswertevorgang im Abschnitt der geschnittenen Teilkontur K1 Bereiche mit schlechter Schneidqualität detektiert werden, kann die Anlagensteuerung C die Bearbeitung stoppen und/oder eine Fehlermeldung ausgeben. Alternativ oder ergänzend dazu können einer oder mehrere Schneidparameter automatisch angepasst werden, wie beispielsweise der Vorschub, die Laserleistung, der Schneidgasdruck oder die Fokusposition. Falls beim Scanvorgang nicht durchgeschnittene Konturbereiche detektiert werden, können überdies diese Bereiche nachgeschnitten werden. Anschliessend wird vorzugsweise der Schneidprozess am Unterbrechungspunkt, vorzugsweise mit dem geänderten Schneidparametersatz, fortgesetzt. Die Unterbrechung des Schneidvorganges erfolgt vorzugsweise nach einer Teilbearbeitungsstrecke deren Länge vor Beginn des Bearbeitungsvorganges vorgegeben wurde.

Bevorzugt bleibt es nicht bei dieser einen Offline-Prozessüberwachung, sondern deren Schritte können prinzipiell beliebig oft und allenfalls auch mit wechselnder Häufigkeit wiederholt werden. Der gesamte Schneidvorgang für Teilkonturen K1 bis KX kann vorzugsweise einen kompletten Schneidplan für eine Mehrzahl von auszuschneidenden Teilen W umfassen, und jeder Teilbearbeitungsvorgang K1 bis KX wiederum kann maximal den Schneidplan für eines dieser Teile umfassen. Bevorzugt umfasst aber ein Teil W resp. eine Kontur K mehrere Teilkonturen. Nach einem weiteren, zweiten Abschnitt des Schneidvorganges beispielsweise unterbricht die Steuerung wiederum den Schneidprozess und der Schneidkopf 1 mit seiner Detektoranordnung 2, 3, 6 scannt das zuletzt geschnittene Konturstück K2 zumindest in einem Teilbereich davon wieder ab, wie dies in Fig. 2 schematisch dargestellt ist. Falls wiederum Bereiche mit schlechter Schneidqualität detektiert werden, können obige Massnahmen, wie automatische Anpassung von Schneidparametern, wiederholt werden. Falls das Problem behoben ist, wird die Kontur K des gesamten Teils W aus der Blechtafel T in diesem intermittierenden Betrieb fertiggeschnitten. Die weiteren Schneidteile des gesamten Schneidplans auf der Blechtafel T werden in demselben intermittierenden Betrieb geschnitten und gescannt.

Der Überwachungsgrad kann eingestellt werden. Bei maximaler Einstellung werden alle Teile und Konturen nachgescannt, bei Einstellung "jedes x-te Teil" wird jedes x-te Teil gescannt, oder es können auch nur die ersten Teile einer Blechtafel überprüft oder eine zufällige Prüffolge ausgewählt werden. Eine weitere Möglichkeit, welche insbesondere im Zusammenhang mit einem Online-Prozessüberwachungs-system vorteilhaft ist, besteht darin, die Länge der Teilkonturen KX gross zu wählen, und nur kurze Strecken unmittelbar am Ende der Teilkonturen abzuscannen.

Auch kann die Länge der Teilbearbeitungsstrecken K1, K2 bzw. des gescannten Teilabschnittes davon in Abhängigkeit von sich verändernden Eigenschaften der Laserschneidvorrichtung wie Absorption des Schutzglases oder der Fokussierlinse des Arbeitslaserstrahls oder der Geometrie der Schneidbahn gewählt werden. Dazu werden bestimmte Überwachungsparameter der Laserschneidmaschine durch die Auswerteeinrichtung E ausgewertet und je nach Relevanz für das die Qualität des Schneidergebnisses berücksichtigt. Auch kann der Schneidplan ausgewertet werden und können Abschnitte identifiziert werden, in welchen typischerweise Qualitätsprobleme entstehen, welche dann vorzugsweise für den Überwachungsscan ausgewählt werden.

Die Detektor- bzw. Sensoranordnung 2, 3, 6 umfasst vorzugsweise eine Anordnung zur berührungslosen Distanzmessung, beispielsweise einen Laserdistanzsensor, welcher extern am Schneidkopf 1 befestigt oder vorzugsweise direkt koaxial in den Strahlengang des Arbeitslaserstrahls integriert ist. Der an sich bereits für andere Anwendungen bekannte Laserdistanzsensor ist dabei vorzugsweise für die Tiefenmessung bei engen Schachtverhältnissen geeignet.

Alternativ kann als Detektoranordnung eine strahlungsempfindliche Sensoranordnung, beispielsweise eine koaxial angeordnete Fotodiode 2 eingesetzt werden. Während des Scanvorgangs muss der Schnittspalt beleuchtet werden, entweder direkt mit dem dazu mit geringer Leistung betriebenen Arbeitslaserstrahl oder mit dessen Pilotlaser, oder mit sonst einer im Strahlengang oder im Schneidkopf 1 untergebrachten Beleuchtungseinrichtung, die vorzugsweise einen Spotdurchmesser im Bereich der Schnittspaltbreite aufweist. Bei Anwesenheit von Schlackenrückstand S im Schnittspalt sind deutliche Reflektionen am Sensor der Detektoranordnung 2, 3, 6 messbar, und der Schlackenrückstand kann somit auf der zuvor geschnittenen Kontur K örtlich genau lokalisiert werden. Als eigentlicher Detektor kann auch eine Anordnung für ein bildgebendes Verfahren eingesetzt werden, vorzugsweise eine Kamera 3, welche am Schneidkopf oder dessen Führungsmechanik befestigt ist, vorzugsweise aber koaxial im Schneidkopf integriert ist. Diese erlauben neben Schlackenrückstand auch die Schnittspaltbreite d und Riefenstruktur, resp. Rauheit R an der oberen Schnittkante zu vermessen. Eine weitere Alternative ist eine kamerabasierte Triangulationsanordnung, mit welcher direkt die Höhe von allfälligem Schlackenrückstand, einseitige Anhaftung von Schlacke an Schnittkanten, Schnittspaltbreite d und Schnittkantenhöhenversatz gemessen werden kann. Damit das Verfahren für beliebige Konturschnitte funktioniert, wird die Laserlinie immer orthogonal zum Schnittspalt mitgedreht.

Eine vorteilhafte Ausgestaltung der Erfindung ist, mit dem Arbeitslaserstrahl gepulst zu scannen, wobei bei Anwesenheit von Schlacke S im Schnittspalt diese kurz aufglüht und so ein deutliches Signal über den Detektor 2, 3, 6 erfasst werden kann. Während des gepulsten Scanvorganges wird vorzugsweise der Arbeitslaserstrahl bezüglich Fokusdurchmesser so eingestellt, dass dieser kleiner ist als die Schnittspaltbreite und die Fokusposition wird so eingestellt, dass der Arbeitslaserstrahl die Schnittflächen nicht berührt.

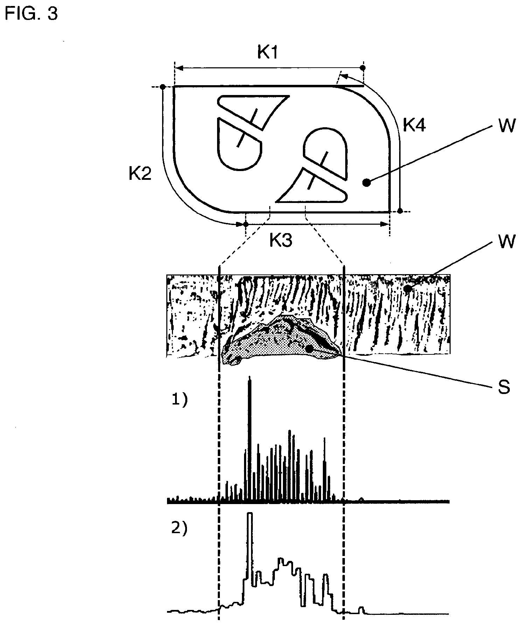

Fig. 3 zeigt die Messung des Schlackenrückstands an einem extremen Beispiel von Prozessabriss beim Laserbrennschneiden von dickem Stahl. Die Teilkonturen K1 und K2 sind bereits geschnitten und im Pulsbetrieb gescannt worden, wobei keinerlei Qualitätsdefekte festgestellt wurden. Nach Schneiden der Teilkontur K3 wurde auch diese im Pulsbetrieb gescannt, um mit dem Detektor 2, 3, 6 allfälliges Aufglühen zu detektieren. Die Detektorsignale zeigen deutlich, dass hierein sehr starker aber ziemlich kurzer Prozessabriss erfolgt ist. Die Fehlstelle kann örtlich auf der Teilkontur K3 sehr genau lokalisiert werden. Zudem zeigen sowohl die Detektor-Roh-Signale (Bereich 1) wie auch die pulsweise aufbereiteten Signale (Bereich 2) deutlich die Höhe der Schlacke S resp. der Verschweissung in Abhängigkeit der Position auf der Teilkontur an. Für die nachfolgende Bearbeitung stehen nun die oben bereits aufgeführten Möglichkeiten offen: 1. Nachbearbeitung der Fehlstelle und oder 2. Abbruch des Schneidvorgangs oder 3. weitere Bearbeitung einer nachfolgenden Teilkontur K4, vorzugsweise mit justiertem Schneidparametersatz. In gewissen Anwendungsbereichen, z.B. im Anlagenbau oder im Schiffsbau werden sehr grosse Teile aus dickem Stahlblech geschnitten. Haben die Teile Partien mit z.B. spitzen Ecken oder etwas eng liegenden Innenkonturen, kann es unter Umständen zu Verschweissungen in diesen Konturbereichen kommen. Mit dem erfindungsgemässen Offlineverfahren können diese Partien identifiziert, nachgeschnitten oder anderweitig nachbearbeitet und somit teurer Ausschuss verhindert werden.

Besonders vorteilhaft ist die Verwendung von Detektoranordnungen 3, 6 mit nichtkoaxialen Detektoren, d.h. mit schräg zur optischen Achse A geneigten Beobachtungsrichtungen auf die Prozesszone bzw. den zu scannenden Abschnitt der Schnittkontur K. Dadurch kann insbesondere leicht auf die Höhe des Schlackenrückstands S im Schnittspalt geschlossen werden. Diese Information ist wichtig, um etwa Pseudofehler durch den Schneidrost ausschliessen zu können, oder um eine geeignete automatische Justage der Schneidparameter auslösen zu können. Wird als Detektoranordnung eine nichtkoaxiale Kameraanordnung 3 verwendet, kann entweder die rechte oder linke Schnittfläche abgebildet werden. Trotz der sehr verkürzten Abbildung der senkrechten Schnittflächen ist es möglich, ein Mass für die Rauheit R im oberen Bereich der Schnittkante aus den Graustufenvariationen im Kamerabild berechnen zu können.

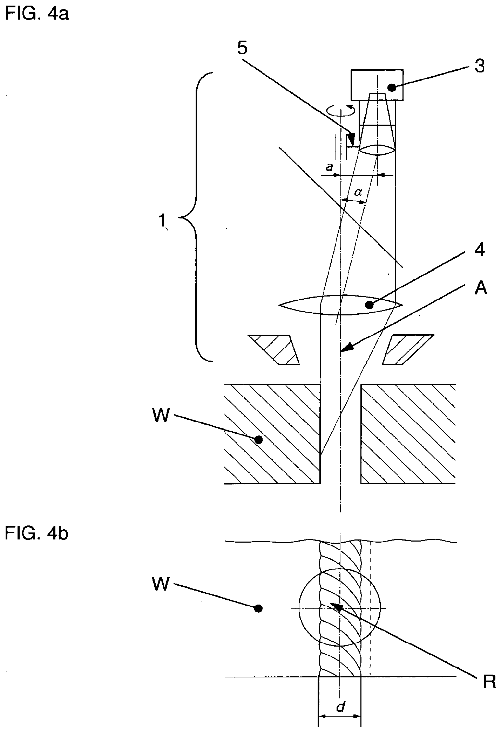

Eine Ausführungsform der Erfindung, die beispielhaft in Fig. 4 dargestellt ist, sieht in diesem Zusammenhang vor, dass die Detektoranordnung eine im Laserschneidkopf 1 angeordnete Kamera 3 aufweist, deren Beobachtungsrichtung α in Ausbreitungsrichtung des Arbeitslaserstrahls zumindest hinter einem der Bearbeitungszone nächstliegenden fokussierenden Element 4 schräg zur optischen Achse des Laserschneidkopfes 1 verläuft. Bevorzugt ist die Kamera 3 exzentrisch zur optischen Achse A des Arbeitslaserstrahls angeordnet. Eine weitere vorteilhafte Weiterbildung besteht darin, dass die Kamera 3 über einen Exzenter 5 senkrecht zur aktuellen Scanrichtung nachgeführt werden kann, wobei allenfalls der Abstand a zwischen Kamera-Achse und optischer Achse A des Laserschneidkopfes 1 variabel einstellbar ist. Damit kann die Schnittfläche der jeweiligen gescannten Kontur K1, K2 in jeder Schneidrichtung seitlich erfasst werden, um mindestens einen Qualitätsparameter, insbesondere eine Schnittflächenrauheit R zu ermitteln. Es ist aber auch denkbar, dass die Detektoranordnung 3 auf den Bearbeitungsachsen am Schneidwagen der Laserschneidanlage montiert wird.

Weiters kann zwecks Korrektur von Abbildungsfehlern z.B. die Kameraachse leicht geneigt werden.

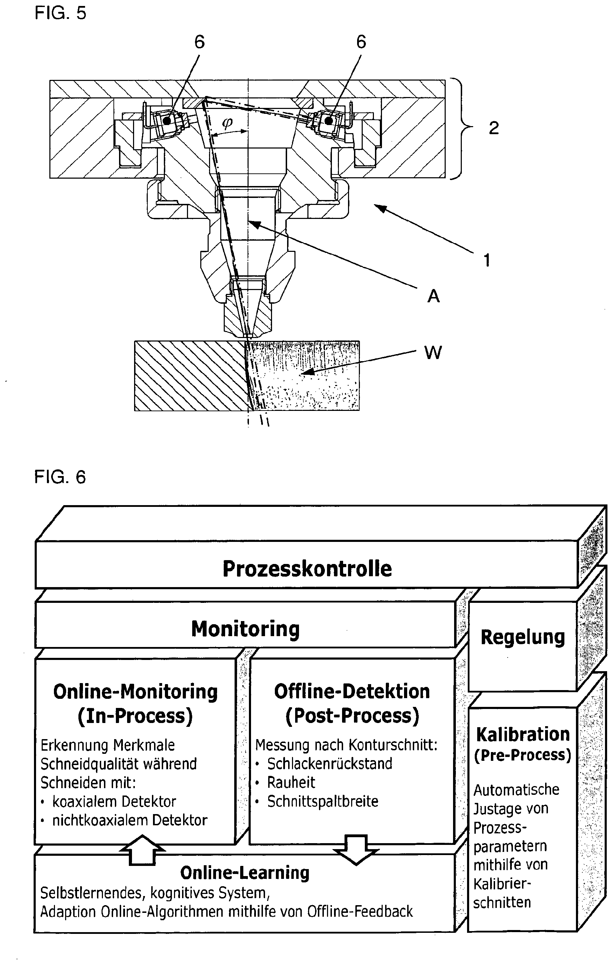

Zur Detektion von Schlackenrückstand S im Schnittspalt und dessen Rückstandshöhe ergeben sich entscheidende Vorteile, wenn eine Anordnung von Sensoren, insbesondere von Fotodioden 6, als Detektoranordnung bzw. wesentlicher Teil davon verwendet wird, die eine Beobachtung mit zum Arbeitslaserstrahl nicht koaxialer Beobachtungsrichtung ermöglichen. Dabei ist, wie in Fig. 5 dargestellt, vorzugsweise die Beobachtungsrichtung der Fotodioden 6 in Ausbreitungsrichtung des Arbeitslaserstrahls zumindest hinter einem der Bearbeitungszone nächstliegenden fokussierenden Element 4, insbesondere einer Fokussieroptik, unter einem Polarwinkel ϕ grösser 5° in Bezug auf die optische Achse A des Arbeitslaserstrahls auf die Bearbeitungszone gerichtet. Vorzugsweise ist dieser Polarwinkel ϕ grösser oder gleich 7°, insbesondere ca. 10°. Für die optimale Detektion von Schlackenrückstand und nicht durchtrennten Konturabschnitten sieht eine weitere bevorzugte Variante vor, dass die Beobachtungsrichtung der Detektoranordnung 6 in einem Bereich eines Azimutwinkels von maximal 45° zur Bewegungsrichtung des Laserbearbeitungskopfes 1 und entgegen der Bewegungsrichtung des Schneidvorganges auf die Bearbeitungszone, d.h. die soeben geschnittene Kontur K1, K2 gerichtet ist.

Anstelle einer gezielten Ausrichtung der Detektoranordnung 2, 3, 6 in eine beispielsweise durch die Scan- oder Schneidrichtung vorgegebenen Richtung kann eine ausreichende Sicht in alle möglichen Vorschubrichtungen auch durch mehrere Detektoranordnungen erzielt werden, die entlang eines zur optischen Achse A des Arbeitslaserstrahls koaxialen und im Wesentlichen senkrechten Kreises vorzugsweise gleich verteilt angeordnet sind und vorteilhafterweise über einen in die Detektoranordnung 2 integrierten Umlenkspiegel, hier Konusspiegel, auf den Bearbeitungs- resp. Scanbereich blicken. Dabei sind mindestens fünf, je nach Detektorabmessungen und Abstand zur Scanzone insbesondere mindestens acht Detektoranordnungen bzw. einzelne Fotodioden 6 einer gemeinsamen Detektoranordnung, erforderlich.

Besonders vorteilhafte Vorgangsweisen für die Prozesskontrolle eines Laserschneidvorganges lassen sich durch eine Kombination des bislang beschriebenen Verfahrens und der erläuterten Vorrichtungen zusammen mit Online-Überwachungsverfahren konzipieren. Diese erweitern als integriertes System, wie im Diagramm der Fig. 6 dargestellt ist, sowohl die Online- als auch Offline-Systeme zu einem selbstlernenden kognitiven Prozesskontrollsystem.

Online-Systeme berechnen in ihrer Grundausführung diverse Charakteristiken aus Detektorsignalen, wobei daraus mehrere Qualitätsmerkmale geschätzt werden. Schätzung ist in diesem Kontext im Sinne der Statistik zu verstehen, wonach die Eingangsgrössen resp. Messungen immer mit Unsicherheit behaftet sind. Mithilfe von statistischen resp. stochastischen Modellen und geeigneten Schätzverfahren wie Kleinste-Quadrate oder Maximum-Likelihood werden unter Berücksichtigung der Information über die Unsicherheit optimale Ausgangs- oder Zielgrössen geschätzt.

Im Folgenden werden beispielhaft einige Ausgestaltungen einer Integration beider Systeme beschrieben. Die einfachste erfindungsgemässe Ausführungsform ist ein Verfahren mit der oben erläuterten Offline-Überwachung, bei welchem für den Schneidvorgang zusätzlich zumindest zeitweise ein Online-Prozessüberwachungsverfahren durchgeführt wird. Je nach Resultat des Vergleichs auf Basis des Scanergebnisses, bei dem automatisch mehrere Qualitätsmerkmale des Bearbeitungsergebnisses bestimmt und mit vordefinierten Qualitätsvorgaben verglichen werden, kann hier auch eine Anpassung zumindest eines Überwachungsparameters des Online-Prozessüberwachungssystems und/oder eine Fortsetzung des Schneid-vorganges mit dem angepassten Online-Überwachungsparametersatz als Resultat der Offline-Überwachung vorgesehen sein. Anstelle einer fix vorgegebenen Abfolge des Offline-Prozessüberwachungsverfahrens kann auch eine anlassgetriggerte Durchführung vorgesehen sein, bei welcher eine Ausführungsvariante des erfindungsgemässen Offline-Verfahrens abhängig von mittels eines Online-Prozessüberwachungsverfahrens geschätzten resp. detektierten Qualitätsdefektes, dessen Vorhandensein aber mit Unsicherheit behaftet ist, ausgelöst und durchgeführt wird. Beispielsweise kann der Offline-Überwachungsgrad auf die Option "bei erhöhter Schlackewahrscheinlichkeit" eingestellt werden. Damit wird nach Hinweis durch die Online-Überwachung eine Offline-Detektion ausgelöst. Die mit Unsicherheit behaftete Diagnose der Online-Überwachung kann damit verifiziert werden. Pseudofehler werden so ausgeschlossen.

Eine vorteilhafte Weiterführung der Integration von Offline- und Online-Verfahren hin zu einem selbstlernenden Verfahren kann erreicht werden, wenn die Algorithmen des Online-Prozessüberwachungsverfahrens und deren Parametrierung laufend mithilfe von vorzugsweise gelegentlichem Feedback aus der Auswertung der Scanvorgänge des Offline-Verfahrens angepasst und so deren Trennschärfe zwischen guter und schlechter Schneidqualität erhöht und die Fehlklassifizierungsraten gesenkt werden. Geeignete Algorithmen dazu kommen aus dem Bereich Machine-Learning und künstliche Intelligenz. Dazu gehört das überwachte Lernen (supervised Learning), welches z.B. mit künstlichen neuronalen Netzwerken implementiert werden kann. Insbesondere für den Umgang mit gelegentlichem Feedback geeignet sind Verfahren für schwach überwachtes Lernen (weakly supervised learning oder semi-supervised learning). Als Beispiel dafür sei das sog. Reinforcement Learning erwähnt.

Die erfindungsgemässen Ausführungsformen des Offline-Prozessüberwachungsverfahrens können vorteilhaft weiters für dem Bearbeitungsvorgang vorangestellte oder auch während der Bearbeitung regelmässig wiederholte Kalibriervorgänge eingesetzt werden. Dabei können Kalibrierschnitte mit unterschiedlichen Bearbeitungsparameter-Einstellungen durchgeführt werden, wobei z.B. die Fokusposition und der Vorschub nach einem geeigneten Algorithmus automatisch variiert werden. Im Anschluss oder auch intermittierend zur Bearbeitung wird mit dem Offline-Ver-fahren der Schlackenrückstand oder ein anderes Qualitätsmerkmal erfasst. Damit lassen sich gute und schlechte Einstellungen der Bearbeitungsparameter ermitteln, und die dazugehörigen Charakteristiken aus den Signalen des Online-Systems abspeichern. Insbesondere der erste Teilbearbeitungsvorgang und Scanvorgang bzw. die erste Gruppe von Teilbearbeitungsvorgängen und Scanvorgängen sind zur Kalibrierung oder als Referenzvorgang einem eigentlichen Bearbeitungsvorgang vorgelagert. Je nach Resultat des Vergleichs der offline gemessenen Qualitätsmerkmale mit den Qualitätsvorgaben wird für zumindest einen Schneidparameter dessen Wert für den nachfolgenden eigentlichen Bearbeitungsvorgang justiert. Eine besonders gute Anpassung für den eigentlichen Laserschneidvorgang kann durch die Durchführung mehrerer Teilkalibriervorgänge mit unterschiedlichen Schneidparametereinstellungen erzielt werden, oder auch wenn innerhalb eines Teilkalibriervorganges ein oder mehrere Schneidparameter verändert werden, wobei jeweils nach den Teilbearbeitungsvorgängen die Qualitätsmerkmale automatisch bestimmt und die nach Abschluss des Kalibriervorgangs folgende eigentliche Bearbeitung entweder mit angepassten Schneidparametern und/oder angepassten Überwachungsparametern durchgeführt wird. Die Parametervariationen können nach bekannten Optimierungsalgorithmen vorgenommen werden, beispielsweise dem Newton-Verfahren, einem Gradientenverfahren oder aber auch Optimierungsverfahren aus der statistischen Versuchsplanung (Design of Experiment), z.B. ein Central-Composite-Versuchsplan.

Die Kalibrierschnitte können automatisch z.B. zu Beginn einer Produktionscharge durchgeführt werden. Bei Laserschneidanlagen ist dies bevorzugt zu Beginn der Bearbeitung einer neuen Blechtafel. Kalibrierschnitte können aber auch während der Bearbeitung automatisch oder durch den Operateur manuell ausgelöst werden. Dies ist angezeigt bei veränderten nicht oder schwer beeinflussbaren Umgebungseinflüssen, wie z.B. erhöhte Absorption des Schutzglases, Alterung und Verschmutzung der Bearbeitungsdüse, usw.

Eine weitere vorteilhafte Ausgestaltung des Verfahrens ist möglich, wenn die Blechtafel mit vorgängigen Trennschnitten bearbeitet wird. Die Trennschnitte können direkt als Kalibrierschnitte durchgeführt werden. Dabei muss darauf geachtet werden, dass bei den Trennschnitten infolge Prozessparameter-Variationen keine zu starken Qualitätsdefekte auftreten. Eine weitere vorteilhafte Ausgestaltung des Verfahrens ist, die Kalibrierschnitte bei der Schachtelung der Teile so auf der Blechtafel zu positionieren, dass kein zusätzlicher Abfall entsteht. Die Kalibrierschnitte müssen dazu von der Schachtelungssoftware automatisch in Bereichen des Abfallblechs resp. Restgitters angebracht werden.

Eine weitere vorteilhafte Ausgestaltung des Verfahrens ist, Kalibrierschnitte nicht nur zu Beginn einer Blechtafel durchzuführen, sondern nach einer gewissen Anzahl an Teilen oder Schnittmetern immer wiederkehrend zu wiederholen. Dadurch wird ein Wegdriften der Schneidqualität erkannt und kann einfach korrigiert werden. Mithilfe eines geeigneten Optimierungsalgorithmus kann sichergestellt werden, dass hinsichtlich der Qualitätsmessgrössen immer mit optimalen Prozessparametern geschnitten wird.

Eine weitere vorteilhafte Ausgestaltung des Verfahrens ist, Kalibrierschnitte dann durchzuführen, wenn ein Qualitätsdefekt an einem geschnittenen Teil mit dem ursprünglich offenbarten Offline-Verfahren detektiert wird. Dadurch können die Prozessparameter optimal neu justiert werden.

Eine weitere Ausgestaltung des Verfahrens ist, das Konzept Kalibrierschnitte auf die Zielteile selbst zu übertragen. Voraussetzung dafür ist allerdings, dass keine gravierenden Qualitätsdefekte erzeugt werden. Dabei werden die zu produzierenden Teile mit automatischen Parametervariationen geschnitten und nach dem ursprünglich offenbarten Offline-Verfahren abgescannt. Dadurch kann ohne Kalibrierschnitte sichergestellt werden, dass hinsichtlich der Qualitätsmessgrössen immer mit optimalen Prozessparametern geschnitten wird.

Die Kalibrierung kann aber auch hilfreich sein, um ein Online-Prozesskontroll-verfahren zu verbessern, indem ein Kalibriervorgang mit wechselnden Schneidparameter-Einstellungen durchgeführt und durch ein Online-Prozessüberwachungs-verfahren überwacht wird. Dabei wird vorteilhafterweise eine Konkordanz erstellt mit den variierten Schneidparameter-Einstellungen, den mit dem Offline-Verfahren bestimmten Qualitätsmerkmalen des Bearbeitungsergebnisses und mit den dazugehörigen Charakteristiken der Signale des Online-Prozessüberwachungssystems. Diese Konkordanz wird in der Steuerung gespeichert. Damit ist es der Anlage möglich, bisher noch nicht aufgetretene Zustände des Bearbeitungsprozesses und damit bisher unbekannte Ausprägungen der Signalcharakteristiken des Online-Systems mithilfe des Offline-Feedbacks automatisch zu erlernen und den Schneidprozess zu regeln.

Eine andere Variante sieht vor, dass ein Bearbeitungsvorgang mit zeitlich aufeinanderfolgenden Variationen mehrerer Bearbeitungsparameter durchgeführt und der Bearbeitungsprozess abhängig von mehreren mittels eines Online-Prozessüberwachungsverfahrens geschätzten Qualitätsmerkmalen des Bearbeitungsergebnisses und Feedback von Messwerten aus einem der erfindungsgemässen Offline-Prozessüberwachungsverfahren zu dem oder den gleichen Qualitätsmerkmal(en) mithilfe der steuerbaren Prozessparameter geregelt wird. Dabei kann das Offline-Verfahren auf den ganzen Teilbearbeitungsbereichen oder vorzugsweise nur auf Teilabschnitten der Teilbearbeitungsbereiche angewendet werden. Eine vorteilhafte Ausgestaltung der Erfindung erweitert das Konzept Kalibrierschnitte zu einem selbstkalibrierenden geregelten System dahingehend, dass leichte Parametervariationen mehrerer Bearbeitungsparameter simultan während der Bearbeitung durchgeführt werden. Der Bearbeitungsprozesszustand wird dann aufgrund der Prozessantwort in den Detektorsignalen und sporadischem Feedback des Offline-Systems mithilfe der steuerbaren Prozessparameter geregelt. Aufgrund der physikalischen Aspekte, wonach sich in den Detektorsignalen Informationen zur Bearbeitungsqualität und noch nicht im Bearbeitungsergebnis sichtbare Informationen zum Prozesszustand überlagern, ist eine Regelung der Bearbeitungsqualität innerhalb eines Toleranzbandes möglich.

Teil der Erfindung ist auch ein Computerprogrammprodukt, welches in Anspruch 22 definiert ist. Das Computerprogrammprodukt wird insbesondere nach Laden in den Speicher einer Anordnung zur Ermittlung mindestens eines Qualitätsparameters eines Schneidbearbeitungsergebnisses - insbesondere der Steuereinheit und/oder der Auswerteeinheit einer programmierbaren Laserschneidvorrichtung, die Durchführung eines der oben beschriebenen Verfahren bewirken.

### Liste der Bezugszeichen:

- Schneidkopf: 1
- Detektoranordnung: 2
- Kamera: 3
- Fokussierendes Element: 4
- Exzenter: 5
- Fotodioden: 6
- Optische Achse: A
- Steuereinheit: C
- Schnittspaltbreite: d
- Auswerteeinrichtung: E
- Schneidkontur: K
- Teilkontur: K1, K2....KX
- Rauheit: R
- Schlackenrückstand: S
- Blechtafel: T
- Werkstück: W
- Beobachtungsrichtung: α, ϕ

## Patentansprüche

1. Verfahren zur Kontrolle von Laserschneidvorgängen im Hochleistungsbereich grösser 1 kW Durchschnittsleistung,
wobei nach Unterbrechung und/oder Abschluss eines mit vorgegebenen Schneidparametern durchgeführten Schneidvorganges automatisiert eine Qualitätskontrolle durchgeführt wird,
**dadurch gekennzeichnet, dass**
der Schneidvorgang nach einem ersten Teilbearbeitungsvorgang unterbrochen wird, dass
zumindest eine Teilstrecke (K1,...KX) der im Zuge des ersten Teilbearbeitungsvorganges geschnittenen Bearbeitungsstrecke vorzugsweise nahe oder auf dergleichen Bearbeitungsbahn gescannt wird, vorzugsweise mit höherer Geschwindigkeit als jener für das Laserschneiden des ersten Teilbearbeitungsvorganges und , dass auf Basis des Scanergebnisses automatisch mehrere Qualitätsmerkmale des Bearbeitungsergebnisses bestimmt werden, wobei die mehreren Qualitätsmerkmale ausgewählt sind aus: einem Schlackenrückstand (S) in einem Schnittspalt auf der Bearbeitungsbahn, nicht vollständig durchgeschnittenen Konturabschnitten, einer Schnittspaltbreite oder einer Schnittkantenrauheit, und wobei die mehreren Qualitätsmerkmale mit vordefinierten Qualitätsvorgaben verglichen werden, und dass je nach Resultat des Vergleichs mindestens eine der folgenden Massnahmen durchgeführt wird: Ausgabe einer Fehlermeldung, Abbruch des Schneidvorganges, Anpassung zumindest eines der Schneidparameter, Nachbearbeitung einer oder mehrerer Fehlstellen, Fortsetzung des Schneidvorganges, vorzugsweise mit einem geänderten Schneidparametersatz.

2. Verfahren nach Anspruch 1, **dadurch gekennzeichnet, dass** für den Schneidvorgang zusätzlich zumindest zeitweise ein Online-Prozessüberwachungsverfahren durchgeführt wird, wobei je nach Resultat des Vergleichs allenfalls eine Anpassung zumindest eines Überwachungsparameters des Online-Prozessüberwachungssystems und/oder eine Fortsetzung des Schneidvorganges mit dem angepassten Online-Überwachungsparametersatz erfolgt.

3. Verfahren nach Anspruch 1 oder 2, **dadurch gekennzeichnet, dass** nach Fortsetzung des Schneidvorganges dieser nach einem weiteren Teilbearbeitungsvorgang (K2.....KX) nochmals unterbrochen wird,
zumindest eine Teilstrecke der weiteren Teilbearbeitungsstrecke vorzugsweise nahe oder auf der gleichen Bearbeitungsbahn gescannt wird, vorzugsweise mit höherer Geschwindigkeit als jener für den weiteren Teilbearbeitungsvorgang,
dass dabei automatisch die mehreren Qualitätsmerkmale des Bearbeitungsergebnisses, vorzugsweise die gleichen Qualitätsmerkmale wie für die erste Teilbearbeitungsstrecke, bestimmt und mit vordefinierten Qualitätsvorgaben verglichen werden, und
dass je nach Resultat des Vergleichs mindestens eine der folgenden Massnahmen durchgeführt wird: Ausgabe einer Fehlermeldung, Abbruch des Schneidvorganges, Anpassung zumindest eines der Schneidparameter, Anpassung zumindest eines Überwachungsparameters eines Online-Prozessüberwachungssystems, Nachbearbeitung einer oder mehrerer Fehlstellen, Fortsetzung des Schneidvorganges, vorzugsweise mit dem geändertem Schneidparametersatz oder dem angepassten Online-Überwachungsparametersatz.

4. Verfahren nach einem der Ansprüche 1 bis 3, **dadurch gekennzeichnet, dass** deren Verfahrensschritte im Zuge des Schneidvorganges mehrere Male durchlaufen werden, wobei der gesamte Schneidvorgang vorzugsweise einen kompletten Schneidplan für eine Mehrzahl von Werkstücken (W) und jeder Teilbearbeitungsvorgang maximal den Schneidplan für eines der Werkstücke (W) umfasst, allenfalls einen Teilabschnitt des Schneidplans für ein Werkstück umfasst.

5. Verfahren nach zumindest einem der Ansprüche 1 bis 4, **dadurch gekennzeichnet, dass** die Unterbrechung des Schneidvorganges nach einer Teilbearbeitungsstrecke (K1 .... KX) mit vorgegebener Schnittlänge erfolgt.

6. Verfahren nach Anspruch 5, **dadurch gekennzeichnet, dass** in Abhängigkeit des Vergleichs der mehreren Qualitätsmerkmale, insbesondere Schnittspaltbreite (d), Schnittflächenrauheit (R) und nicht vollständig durchgeschnittene Konturbereiche, sowie auch Schlackenrückstand (S), mit den Qualitätsvorgaben zumindest einer der Schneidparameter wie insbesondere Vorschub, Laserleistung, Fokusposition und Schneidgasdruck automatisch justiert werden.

7. Verfahren nach Anspruch 5 oder 6, **dadurch gekennzeichnet, dass** die Länge der Teilbearbeitungsstrecke (K1....KX) bzw. des gescannten Teilabschnittes davon in Abhängigkeit von sich verändernden Eigenschaften der Laserschneidvorrichtung oder der Geometrie der Schneidbahn gewählt wird.

8. Verfahren nach einem der Ansprüche 1 bis 7, **dadurch gekennzeichnet, dass** die Anzahl und/oder die Auswahl der Teilbearbeitungsstrecken (K1....KX) vorwählbar ist/sind, insbesondere, dass die Bearbeitungsstrecke (K) ohne Teilbearbeitungsstrecke abgearbeitet wird oder dass der Schneidvorgang (K) nur eine Teilbearbeitungsstrecke aufweist und/oder dass nur auf einer Teilmenge der Bearbeitungsstrecken (K) resp. der Werkstücke (W) Teilbearbeitungsvorgänge abgearbeitet werden.

9. Verfahren nach einem der Ansprüche 1 bis 8, **dadurch gekennzeichnet, dass** insbesondere der erste Teilbearbeitungsvorgang und Scanvorgang bzw. die erste Gruppe von Teilbearbeitungsvorgängen und Scanvorgängen einem eigentlichen Bearbeitungsvorgang als Kalibrier- oder Referenzvorgang vorgelagert ist/sind, und je nach Resultat des Vergleichs der gemessenen Qualitätsmerkmale mit den Qualitätsvorgaben für zumindest einen Schneidparameter dessen Wert für den nachfolgenden eigentlichen Bearbeitungsvorgang justiert wird, wobei vorzugsweise mehrere Teilkalibriervorgänge mit unterschiedlichen Schneidparametereinstellungen nacheinander durchgeführt werden und/oder innerhalb eines Teilkalibriervorganges ein oder mehrere Schneidparameter verändert werden, wobei nach den Teilbearbeitungsvorgängen die Qualitätsmerkmale automatisch bestimmt und die nach Abschluss des Kalibriervorgangs folgende eigentliche Bearbeitung entweder mit angepassten Schneidparametern und/oder angepassten Überwachungsparametern durchgeführt wird.

10. Verfahren nach einem der Ansprüche 1 bis 9, **dadurch gekennzeichnet, dass** zumindest ein Teilvorgang des Schneidvorganges durch ein Online-Prozessüberwachungsverfahren überwacht wird, und ein Verfahren nach einem der Ansprüche 1 bis 9 durchgeführt wird.

11. Verfahren nach Anspruch 9, **dadurch gekennzeichnet, dass** zumindest ein Kalibriervorgang mit wechselnden Schneidparameter-Einstellungen durchgeführt und durch ein Online-Prozessüberwachungsverfahren überwacht wird, wobei eine Konkordanz der ermittelten Qualitätsmerkmale des Bearbeitungsergebnisses mit den verwendeten Schneidparameter-Einstellungen und mit Charakteristiken der Signale des Online-Prozessüberwachungssystems erstellt und zur Verwendung in letzterem gespeichert werden.

12. Verfahren nach einem der Ansprüche 1 bis 9, **dadurch gekennzeichnet, dass** ein Bearbeitungsvorgang mit zeitlich aufeinanderfolgenden Variationen mehrerer Bearbeitungsparameter durchgeführt und der Bearbeitungsprozess abhängig von mehreren mittels eines Online-Prozessüberwachungsverfahrens geschätzten Qualitätsmerkmalen des Bearbeitungsergebnisses und Feedback von Messwerten aus einem Verfahren nach einem der Ansprüche 1 bis 8 zu den gleichen Qualitätsmerkmalen mithilfe der steuerbaren Prozessparameter geregelt wird, wobei das Verfahren gemäss einem der Ansprüche 1 bis 8 auf den ganzen Teilbearbeitungsbereichen oder vorzugsweise nur auf Teilabschnitten der Teilbearbeitungsbereiche angewendet wird.

13. Verfahren nach Anspruch 12, **dadurch gekennzeichnet, dass** Algorithmen des Online-Prozessüberwachungsverfahrens und deren Parametrierung laufend mithilfe von vorzugsweise gelegentlichem Feedback des Verfahrens gemäss einem der Ansprüche 1 bis 8 angepasst werden.

14. Hochleistungs-Laserschneidvorrichtung, mit einer Anordnung (E, 2, 3, 6, C) zur Ermittlung mehrerer Qualitätsmerkmale des Bearbeitungsergebnisses, umfassend zumindest eine Detektoranordnung (2, 3, 6) zur Erfassung aus dem Scanbereich reflektierter Strahlung und oder emittierter, insb. thermischer, Strahlung und eine damit verbundene Auswerteeinheit (E), sowie eine Steuereinheit (C) für die Hochleistungs-Laserschneidvorrichtung, **dadurch gekennzeichnet, dass** in der Steuereinheit (C) und/oder in der Auswerteeinheit (E) ein Programm implementiert ist, das dazu ausgelegt ist, ein Verfahren nach einem der Ansprüche 1 bis 13 durchzuführen.

15. Vorrichtung nach Anspruch 14, **dadurch gekennzeichnet, dass** die Detektoranordnung (2, 3, 6) eine Anordnung zur berührungslosen Distanzmessung umfasst, beispielsweise einen Laserdistanzsensor, welcher extern am Schneidkopf (1) befestigt ist, oder direkt koaxial in den Strahlengang des Arbeitslaserstrahls integriert ist, oder eine Anordnung für ein bildgebendes Verfahren, vorzugsweise eine Kamera (3), welche am Schneidkopf (1) oder dessen Führungsmechanik befestigt ist, vorzugsweise aber koaxial im Schneidkopf (1) integriert ist, eine kamerabasierte Triangulationsanordnung, oder zumindest einen strahlungsempfindlichen Detektor, beispielsweise eine Fotodiode (6).

16. Vorrichtung nach Anspruch 15, **dadurch gekennzeichnet, dass** die Steuereinheit (C) adaptiert ist, um den Arbeitslaser während des Scanvorganges gepulst zu betreiben, wobei vorzugsweise der Arbeitslaserstrahl bezüglich Fokusdurchmesser so eingestellt wird, dass dieser kleiner ist als die Schnittspaltbreite (d) und die Fokusposition so eingestellt wird, dass der Arbeitslaserstrahl die Schnittflächen nicht berührt, und dass die Detektoranordnung (2, 3, 6) adaptiert ist, um das kurze Aufglühen von Schlacke (S) im Schnittspalt zu erfassen.

17. Vorrichtung nach Anspruch 15, **dadurch gekennzeichnet, dass** die Detektoranordnung eine im Laserschneidkopf angeordnete Kamera (3) aufweist, deren Beobachtungsrichtung in Ausbreitungsrichtung des Arbeitslaserstrahls zumindest hinter einem der Bearbeitungszone nächstliegenden fokussierenden Element (4) schräg zur optischen Achse (A) des Laserschneidkopfes (1) verläuft, wobei die Kamera (3) vorzugsweise exzentrisch zu dessen optischer Achse (A) angeordnet ist und vorzugsweise über einen Exzenter (5) senkrecht zur aktuellen Scanrichtung derselben nachgeführt werden kann und wobei allenfalls der Abstand zwischen Kamera-Achse und optischer Achse (A) des Laserschneidkopfes (1) variabel einstellbar ist.

18. Vorrichtung nach einem der Ansprüche 14 bis 17 **dadurch gekennzeichnet, dass** die Beobachtungsrichtung der Detektoranordnung (2, 3, 6) in Ausbreitungsrichtung des Arbeitslaserstrahls zumindest hinter einem der Bearbeitungszone nächstliegenden fokussierenden Element (4) unter einem Polarwinkel (ϕ) grösser 5° in Bezug auf die optische Achse des Arbeitslaserstrahls auf die Bearbeitungszone gerichtet ist, vorzugsweise unter einem Polarwinkel grösser oder gleich 7°, insbesondere unter einem Polarwinkel (ϕ) von ca. 10°.

19. Vorrichtung nach Anspruch 18, **dadurch gekennzeichnet, dass** zumindest eine Detektoranordnung (2, 3, 6) vorgesehen ist, deren Beobachtungsrichtung (ϕ) in einem Bereich eines Azimutwinkels von maximal 45° zur Bewegungsrichtung des Laserbearbeitungskopfes (1) und entgegen dessen Bewegungsrichtung auf die Bearbeitungszone gerichtet ist.

20. Vorrichtung nach Anspruch 18, **dadurch gekennzeichnet, dass** mehrere Detektoranordnungen, vorzugsweise mindestens fünf, insbesondere mindestens acht Detektoranordnungen (6), entlang eines zur optischen Achse (A) koaxialen und im Wesentlichen senkrechten Kreises vorzugsweise gleich verteilt angeordnet sind.

21. Vorrichtung nach einem der Ansprüche 15 bis 20, **dadurch gekennzeichnet, dass** eine Beleuchtungsanordnung für die Detektoranordnung (2, 3, 6) vorhanden ist, welche den Arbeitslaser selbst, einen Hilfslaser oder einen Pilotlaser für den Arbeitslaser umfasst.

22. Computerprogrammprodukt, das nach Laden in einen Speicher einer Steuereinheit (C) und/oder einer Auswerteeinheit (E) einer programmierbaren Laserschneidvorrichtung, die Durchführung eines Verfahrens nach einem der Ansprüche 1 bis 13 bewirkt, wobei die programmierbare Laserschneidvorrichtung eine Anordnung (E, 2, 3, 6, C) zur Ermittlung mehrerer Qualitätsmerkmale des Schneidbearbeitungsergebnisses umfasst.

## Claims

1. A method of controlling a laser cutting process in a high-energy zone higher than 1 kW average power,
wherein, after the interruption and/or completion of a cutting process carried out with predetermined cutting parameters, an automated quality control is performed,
**characterised in that**
the cutting process is interrupted after a first partial machining operation, **in that** at least a section (K1,...KX) of the machining section that was cut in the course of the first partial machining operation is scanned, preferably near or on the same machining path, preferably at a higher speed than the one used for laser cutting the first partial machining operation, and **in that**, based on the scan result, a plurality of quality characteristics of the machining result is automatically determined, wherein the plurality of quality characteristics is selected from: a dross residue (S) in a cutting gap on the machining path, not completely cut-through contour areas, a cutting gap width, or a cutting edge roughness, and wherein the plurality of quality characteristics are compared with predefined quality standards, and **in that**, depending on the result of the comparison, at least one of the following actions is performed: outputting an error message, aborting the cutting process, adjusting at least one of the cutting parameters, reworking of one or more fault locations, continuing the cutting process, preferably with a changed set of cutting parameters.

2. The method according to claim 1, **characterised in that** for the cutting process, in addition at least from time to time, an online process monitoring method is performed, whereby, depending on the result of the comparison, at best an adjustment of at least one monitoring parameter of the online process monitoring system and/or a continuation of the cutting process with the adjusted set of online monitoring parameters is performed.

3. The method according to claim 1 or 2, **characterised in that**, after continuation of the cutting process, said cutting process is again interrupted after a further partial machining operation (K2 KX),
at least a section of the further partial machining section is scanned, preferably close to or on the same machining path, preferably at a higher speed than the one used for the further partial machining operation, **in that** in doing so, the plurality of quality characteristics of the machining result, preferably the same quality characteristics as for the first partial machining section, are automatically determined and compared with the predefined quality standards, and
**in that**, depending on the result of the comparison, at least one of the following actions is performed: outputting an error message, aborting the cutting process, adjusting at least one of the cutting parameters, adjusting at least one of the monitoring parameters of an online process monitoring system, reworking of one or more fault locations, continuing the cutting process, preferably with the changed set of cutting parameters, or with the adjusted set of online monitoring parameters.

4. The method according to one of claims 1 to 3, **characterised in that** the method steps are performed a plurality of times in the course of the cutting process, whereby the entire cutting process preferably comprises a complete cutting plan for a plurality of workpieces (W), and every partial machining operation comprises as a maximum the cutting plan for one of the work pieces (W), at best a section of the cutting plan for a work piece.

5. The method according to at least one of claims 1 to 4, **characterised in that** the interruption of the cutting process occurs after a partial machining section (K1.... KX) with a predefined cutting length.

6. The method according to claim 5, **characterised in that**, depending on the comparison of the plurality of quality characteristics, in particular the cutting gap width (d), cutting surface roughness (R) and not completely cut-through contour areas, as well as the dross residue (S), with the quality standards, at least one of the cutting parameters such as, in particular, feed, laser output, focus position and cutting gas pressure, are automatically adjusted.

7. The method according to claim 5 or 6, **characterised in that** the length of the partial machining section (K1....KX) and/or the scanned subsection thereof is selected in dependence on the changing properties of the laser cutting device or the cutting path geometry.

8. The method according to one of claims 1 to 7, **characterised in that** the number and/or the range of the partial machining sections (K1....KX) is preselectable, in particular, **in that** the machining section (K) is machined without a partial machining section or **in that** the cutting process (K) has only one partial machining section and/or **in that** only on a partial quantity of the machining sections (K) or the workpieces (W), partial machining operations are performed.

9. The method according to one of claims 1 to 8, **characterised in that** in particular the first partial machining operation and scanning operation and/or the first group of partial machining operations and scanning operations precede(s) an actual machining operation as calibration or reference operation(s), and, depending on the result of the comparison of the measured quality characteristics with the quality standards for at least one cutting parameter, its value is adjusted for the subsequent actual machining operation, whereby preferably a plurality of partial calibration operations with different cutting parameter settings are performed one after the other and/or within one partial calibration operation one or more cutting parameters are changed, whereby, after the partial machining operations, the quality characteristics are automatically determined and the actual machining that follows the completion of the calibration operation is performed either with adjusted cutting parameters and/or adjusted monitoring parameters.

10. The method according to one of claims 1 to 9, **characterised in that** at least one partial operation of the cutting operation is monitored by means of an online process monitoring procedure and a method according to one of claims 1 to 9 is performed.

11. The method according to claim 9, **characterised in that** at least one calibration operation is performed with varying cutting parameter settings and monitored by means of an online process monitoring procedure, whereby a concordance of the determined quality characteristics of the machining result with the used cutting parameter settings and with the characteristics of the signals of the online process monitoring system is created and stored for use in the latter.

12. The method according to one of claims 1 to 9, **characterised in that** a machining operation with temporally successive variations of a plurality of machining parameters is performed, and the machining operation is controlled by means of the controllable process parameters in dependence on a plurality of quality characteristics of the machining result that was estimated by means of an online process monitoring procedure and feedback of measured values from a method according to one of claims 1 to 8 regarding the same quality characteristics, whereby the method according to one of claims 1 to 8 is applied to the entire partial machining areas or preferably only on sections of the partial machining areas.

13. The method according to claim 12, **characterised in that** algorithms of the online process monitoring method and their parameterisation are continuously adjusted by means of preferably intermittent feedback of the method according to one of claims 1 to 8.

14. A high-energy laser cutting device having an arrangement (E, 2, 3, 6, C) for determining a plurality of quality characteristics of the machining result, comprising at least one detector arrangement (2, 3, 6) for detecting radiation reflected from the scanning area and/or emitted, in particular thermal, radiation, and an analysis unit (E) connected thereto, as well as a control unit (C) for the high-energy laser cutting device, **characterised in that** a program designed for this is implemented in the control unit (C) and/or in the analysis unit (E) which is designed to perform a method according to one of claims 1 to 13.

15. A device according to claim 14, **characterised in that** the detector arrangement (2, 3, 6) comprises an arrangement for contactless distance measurement, for example, a laser distance sensor, which is externally attached to the cutting head (1), or directly coaxially integrated into the beam path of the working laser beam, or an arrangement for an imaging method, preferably a camera (3), which is attached to the cutting head (1) or to its guide mechanism, preferably, however, being coaxially integrated within the cutting head (1), a camera-based triangulation arrangement, or at least a radiation-sensitive detector, for example a photodiode (6).

16. The device according to claim 15, **characterised in that** the control unit (C) is adapted to operate the working laser during the scanning operation in a pulsed manner, whereby preferably the working laser beam is set with regard to the focus diameter in such a way that it is smaller than the cutting gap width (d), and the focus position is set such that the working laser beam does not contact the cutting surfaces, and **in that** the detector arrangement (2, 3, 6) is adapted to detect the short glow of dross (S) in the cutting gap.

17. The device according to claim 15, **characterised in that** the detector arrangement has a camera (3) arranged in the laser cutting head, the observation direction of said camera running in the direction of propagation of the working laser beam at least behind a focusing element (4) positioned closest to the machining zone oblique to the optical axis (A) of the laser cutting head (1), whereby the camera (3) is preferably arranged in an eccentric manner to its optical axis (A) and can preferably be repositioned via an eccentric (5) perpendicularly to the current scanning direction of same, and whereby the distance between the camera axis and the optical axis (A) of the laser cutting head (1) is variably adjustable.

18. The device according to one of claims 14 to 17, **characterised in that** the observation direction of the detector arrangement (2, 3, 6) in the direction of propagation of the working laser beam, at least behind a focusing element (4) closest to the machining zone, is directed onto the machining zone at a polar angle (ϕ) greater than 5° with respect to the optical axis of the working laser beam, preferably at a polar angle greater than or equal to 7°, in particular at a polar angle (ϕ) of approx. 10°.

19. The device according to claim 18, **characterised in that** at least one detector arrangement (2, 3, 6) is provided, the observation direction (ϕ) of which is directed onto the machining one in an area of an azimuth angle of maximum 45° relative to the movement direction of the laser machining head (1) and opposite to its movement direction.

20. The device according to claim 18, **characterised in that** a plurality of detector arrangements, preferably at least five, in particular at least eight detector arrangements (6), are arranged along a circle that is coaxial and substantially perpendicular to the optical axis (A) in a preferably evenly distributed manner.

21. The device according to one of claims 15 to 20, **characterised in that** an illumination arrangement for the detector arrangement (2, 3, 6) is provided, which comprises the working laser itself, an auxiliary laser or a pilot laser for the working laser.

22. A computer program product which, after being loaded into a memory of a control unit (C) and/or an analysis unit (E) of a programmable laser cutting device, effects the performance of a method according to one of claims 1 to 13, whereby the programmable laser cutting device has an arrangement (E, 2, 3, 6, C) for determining a plurality of quality characteristics of the cutting processing result.

## Revendications

1. Méthode de contrôle d'un procédé de découpe au laser de haute énergie supérieure à 1 kW de puissance moyenne,
après l'interruption et/ou l'achèvement d'un procédé de découpe effectué à l'aide des paramètres de découpe prédéterminés, un contrôle qualité étant automatiquement effectué,
**caractérisée en ce que**
le procédé de découpe est interrompu après un premier procédé d'usinage partiel,
**en ce qu'**au moins une section (K1,... KX) de la section d'usinage découpée lors du premier procédé d'usinage partiel est balayée, de préférence à proximité ou sur la même trajectoire d'usinage, de préférence à une vitesse supérieure à celle de la découpe au laser du premier procédé d'usinage partiel et **en ce que**, en fonction du résultat du balayage, plusieurs caractéristiques de qualité du résultat d'usinage sont automatiquement déterminées, les différentes caractéristiques de qualité étant sélectionnées parmi : un résidu de laitier (S) dans une fente de découpe sur la trajectoire d'usinage, des sections de contour pas complètement découpées, une largeur de la fente de découpe ou une rugosité du bord de découpe et les différentes caractéristiques de qualité étant comparées à des spécifications de qualité prédéfinies, et **en ce que**, en fonction du résultat de la comparaison, la mesure suivante est effectuée : la sortie d'un message d'erreur et/ou l'arrêt du procédé de découpe et/ou l'ajustement d'au moins un des paramètres de découpe et/ou l'usinage ultérieur d'un ou de plusieurs défauts et/ou la poursuite du procédé de découpe, de préférence avec un ensemble de paramètres de découpe modifié.

2. Méthode selon la revendication 1, **caractérisée en ce que**, pour le procédé de découpe, une méthode de surveillance du procédé en ligne est en outre mise en œuvre au moins temporairement, en fonction du résultat de la comparaison, au plus un ajustement d'au moins un paramètre de surveillance du système de surveillance du procédé en ligne et/ou une poursuite du procédé de découpe à l'aide de l'ensemble de paramètres de surveillance en ligne ajusté étant effectué.

3. Méthode selon la revendication 1 ou 2, **caractérisée en ce qu'**après la poursuite du procédé de découpe, celui-ci est de nouveau interrompu après un autre procédé d'usinage partiel (K2 .... KX),
au moins une trajectoire partielle de l'autre trajectoire d'usinage partiel est balayée, de préférence à proximité ou sur la même trajectoire d'usinage, de préférence à une vitesse supérieure à celle de l'autre procédé d'usinage partiel de telle sorte que la pluralité de caractéristiques de qualité du résultat d'usinage, de préférence les mêmes caractéristiques de qualité que pour la première trajectoire d'usinage partiel, soient automatiquement déterminées et comparées à des spécifications de qualité prédéfinies,
et
**en ce que**, en fonction du résultat de la comparaison, au moins une des mesures suivantes est mise en œuvre : la sortie d'un message d'erreur et/ou l'arrêt du procédé de découpe, l'ajustement d'au moins un des paramètres de découpe, l'ajustement d'au moins un paramètre de surveillance d'un système de surveillance du procédé en ligne, l'usinage ultérieur d'un ou de plusieurs défauts, la poursuite du procédé de découpe, de préférence à l'aide de l'ensemble de paramètres de découpe modifié ou de l'ensemble de paramètres de surveillance en ligne ajusté.

4. Méthode selon l'une quelconque des revendications 1 à 3, **caractérisée en ce que** ses étapes sont mises en œuvre plusieurs fois lors du procédé de découpe, l'ensemble du procédé de découpe étant de préférence un plan de découpe complet pour une pluralité de pièces (W) et chaque procédé d'usinage partiel comprenant au plus le plan de découpe pour l'une des pièces (W), comprenant au plus une section partielle du plan de découpe pour une pièce.

5. Méthode selon au moins l'une quelconque des revendications 1 à 4, **caractérisée en ce que** l'interruption du procédé de découpe est effectuée après une trajectoire d'usinage partiel (K1 .... KX) de la longueur de découpe spécifiée.

6. Méthode selon la revendication 5, **caractérisée en ce que**, en fonction de la comparaison de la pluralité de caractéristiques de qualité, en particulier la largeur de la fente de découpe (d), la rugosité de la surface de découpe (R) et les zones de contour non complètement découpées, ainsi que le résidu de laitier (S), avec les spécifications de qualité, au moins un des paramètres de découpe tels que, en particulier l'avance, la puissance laser, la position de focalisation et la pression du gaz de découpe est automatiquement ajusté.

7. Méthode selon la revendication 5 ou 6, **caractérisée en ce que** la longueur de la trajectoire d'usinage partiel (K1 .... KX) ou de sa section partielle balayée est choisie en fonction des propriétés modifiées du dispositif de découpe au laser ou de la géométrie de la bande de découpe.

8. Méthode selon l'une quelconque des revendications 1 à 7, **caractérisée en ce que** le nombre et/ou la sélection des trajectoires d'usinage partiel (K1 .... KX) peuvent être présélectionné(e)s, en particulier **en ce que** la trajectoire d'usinage (K) est traitée sans trajectoire d'usinage partiel ou **en ce que** le procédé de découpe (K) ne comporte qu'une trajectoire d'usinage partiel et/ou **en ce que** les procédés d'usinage partiel sont traités sur seulement une quantité partielle des trajectoires d'usinage (K) ou des pièces (W).

9. Méthode selon l'une quelconque des revendications 1 à 8, **caractérisée en ce que** notamment le premier procédé d'usinage partiel et le procédé de balayage ou le premier groupe de procédés d'usinage partiel et de procédés de balayage sont en amont d'un procédé d'usinage proprement dit en tant que procédé d'étalonnage ou de référence, et en fonction du résultat de la comparaison des caractéristiques de qualité mesurées selon les spécifications de qualité pour au moins un paramètre de découpe, dont la valeur est ajustée pour le procédé d'usinage proprement dit ultérieur, de préférence plusieurs procédés d'étalonnage partiel à l'aide de différents réglages de paramètres de découpe étant mis en œuvre l'un après l'autre et/ou au moins un paramètre de découpe étant modifié lors d'un procédé d'étalonnage partiel, après les procédés d'usinage partiel, les caractéristiques de qualité étant automatiquement déterminées et, après l'achèvement du procédé d'étalonnage, l'usinage proprement dit suivant étant mis en œuvre à l'aide des paramètres de découpe ajustés et/ou des paramètres de surveillance ajustés.

10. Méthode selon l'une quelconque des revendications 1 à 9, **caractérisée en ce qu'**au moins un procédé partiel du procédé de découpe est surveillé au moyen d'un procédé de surveillance du procédé en ligne, et un procédé selon l'une quelconque des revendications 1 à 9 est mis en œuvre.

11. Méthode selon la revendication 9, **caractérisée en ce qu'**au moins un procédé d'étalonnage est mis en œuvre à l'aide des réglages de paramètres de découpe changeants et est surveillé au moyen d'un procédé de surveillance du procédé en ligne, une concordance des caractéristiques de qualité déterminées du résultat d'usinage avec les réglages des paramètres de découpe utilisés et avec les caractéristiques des signaux du système de surveillance du procédé en ligne étant établie et enregistrée pour une utilisation dans ce dernier.

12. Méthode selon l'une quelconque des revendications 1 à 9, **caractérisée en ce qu'**un procédé d'usinage est mis en œuvre à l'aide des variations successives de plusieurs paramètres d'usinage et le procédé d'usinage dépend de plusieurs caractéristiques de qualité du résultat d'usinage estimées au moyen d'un procédé de surveillance du procédé en ligne et la rétroaction des valeurs mesurées d'un procédé selon l'une quelconque des revendications 1 à 8 est régulée aux mêmes caractéristiques de qualité à l'aide des paramètres de procédé commandables, le procédé selon l'une quelconque des revendications 1 à 8 étant appliqué à l'ensemble de zones d'usinage partiel ou de préférence uniquement aux sections partielles des zones d'usinage partiel.

13. Méthode selon la revendication 12, **caractérisée en ce que** les algorithmes du procédé de surveillance du procédé en ligne et leur paramétrage sont ajustés en continu à l'aide d'une rétroaction, de préférence occasionnelle, du procédé selon l'une quelconque des revendications 1 à 8.

14. Dispositif de découpe au laser de haute énergie, comportant un agencement (E, 2, 3, 6, C) destiné à la détermination de plusieurs caractéristiques de qualité du résultat d'usinage, comprenant au moins un agencement de détecteur (2, 3, 6) destiné à la détection du rayonnement réfléchi par la zone de balayage et/ou du rayonnement, notamment thermique, émis et une unité d'évaluation (E) reliée à celui-ci, ainsi qu'une unité de commande (C) pour le dispositif de découpe au laser de haute énergie, **caractérisé en ce que**, dans l'unité de commande (C) et/ou dans l'unité d'évaluation (E), un programme est implémenté, lequel est conçu pour mettre en œuvre un procédé selon l'une quelconque des revendications 1 à 13.

15. Dispositif selon la revendication 14, **caractérisé en ce que** l'agencement de détecteur (2, 3, 6) comprend un agencement pour mesurer la distance sans contact, par exemple un capteur de distance laser, lequel est fixé extérieurement à la tête de découpe (1) ou est intégré directement coaxialement dans le trajet de rayonnement du faisceau laser de travail, ou un agencement pour un procédé d'imagerie, de préférence une caméra (3), laquelle est fixée à la tête de découpe (1) ou à son mécanisme de guidage, mais qui, de préférence, est intégrée coaxialement dans la tête de découpe (1), un agencement de triangulation basé sur une caméra, ou au moins un détecteur sensible au rayonnement, par exemple une photodiode (6).

16. Dispositif selon la revendication 15, **caractérisé en ce que** l'unité de commande (C) est adaptée pour faire fonctionner le laser de travail d'une manière pulsée lors du procédé de balayage, le faisceau laser de travail étant de préférence réglé par rapport au diamètre de focalisation de telle sorte que celui-ci soit inférieur à la largeur de fente de découpe (d) et la position de focalisation est réglée de telle sorte que le faisceau laser de travail ne touche pas les surfaces de découpe, et **en ce que** l'agencement de détecteur (2, 3, 6) est adapté pour détecter la brève incandescence du laitier (S) dans la fente de découpe.

17. Dispositif selon la revendication 15, **caractérisé en ce que** l'agencement de détecteur comporte une caméra (3) disposée dans la tête de découpe au laser, dont la direction d'observation dans la direction de propagation du faisceau laser de travail est au moins derrière un élément focalisant (4) le plus proche de la zone d'usinage, à un angle par rapport à l'axe optique (A) de la tête de découpe au laser (1), la caméra (3), étant de préférence disposée de manière excentrique par rapport à son axe optique (A) et, de préférence pouvant être suivie au moyen d'un excentrique (5) perpendiculaire à la direction de balayage actuelle et la distance entre l'axe de la caméra et l'axe optique (A) de la tête de découpe au laser (1) étant réglable de manière variable.

18. Dispositif selon l'une quelconque des revendications 14 à 17, **caractérisé en ce que** la direction d'observation du dispositif de détecteur (2, 3, 6), dans la direction de propagation du faisceau laser de travail au moins derrière un élément focalisant (4) le plus proche de la zone d'usinage à un angle polaire (ϕ) supérieur à 5° par rapport à l'axe optique du faisceau laser de travail, est dirigée vers la zone d'usinage, de préférence à un angle polaire supérieur ou égal à 7°, en particulier à un angle polaire (ϕ) d'environ 10°.

19. Dispositif selon la revendication 18, **caractérisé en ce qu'**au moins un agencement de détecteur (2, 3, 6) est prévu, dont la direction d'observation (ϕ) se situe dans une plage d'un azimut de 45° maximum par rapport à la direction de déplacement de la tête de découpe au laser (1) et est dirigée à l'opposé de sa direction de déplacement sur la zone d'usinage.

20. Dispositif selon la revendication 18, **caractérisé en ce que** plusieurs agencements de détecteur, de préférence au moins cinq, en particulier au moins huit agencements de détecteur (6), sont disposés, de préférence uniformément répartis, le long d'un cercle coaxial à l'axe optique (A) et essentiellement perpendiculaire.

21. Dispositif selon l'une quelconque des revendications 15 à 20, **caractérisé en ce qu'**un agencement d'éclairage est disponible pour l'agencement de détecteur (2, 3, 6), lequel comprend le laser de travail proprement dit, un laser auxiliaire ou un laser pilote pour le laser de travail.

22. Programme d'ordinateur, qui, après avoir été chargé dans une mémoire d'une unité de commande (C) et/ou d'une unité d'évaluation (E) d'un dispositif de découpe au laser programmable, effectue la mise en œuvre d'une méthode selon l'une quelconque des revendications 1 à 13, le dispositif de découpe au laser programmable comprenant un agencement (E, 2, 3, 6, C) pour la détermination de la pluralité de caractéristiques de qualité du résultat d'usinage par découpe.
